# EUROPÄISCHE PATENTSCHRIFT

(11) **EP 3 358 693 B1**
(45) Veröffentlichungstag und Bekanntmachung des Hinweises auf die Patenterteilung: **12.08.2020**
(21) Anmeldenummer: 17205271.4
(22) Anmeldetag: 01.10.2011
(51) Int. Cl.: H02J 3/18, H02J 3/50

(54) **PHOTOVOLTAIKANLAGE MIT BLINDLEISTUNGSEINSPEISUNG IN ABHÄNGIGKEIT DER NETZSPANNUNG**
PHOTOVOLTAIC ASSEMBLY WITH REACTIVE POWER GENERATION DEPENDENT ON MAINS VOLTAGE
INSTALLATION PHOTOVOLTAÏQUE AVEC GÉNÉRATION DE PUISSANCE RÉACTIVE EN FONCTION DE LA TENSION DE RÉSEAU

(30) Priorität: 06.10.2010 DE 102010047652
(43) Veröffentlichungstag der Anmeldung: 08.08.2018
(62) Teilanmeldung aus: 11007956.3
(73) Patentinhaber: BOB Holding GmbH, 97332 Volkach (DE)
(72) Erfinder: BECK, Bernhard, 97332 Volkach (DE)
(74) Vertreter: FDST Patentanwälte

(56) Entgegenhaltungen:
- EP-A2- 2 226 500
- WO-A1-02/086315
- WO-A2-2009/083448
- DE-A1- 10 020 635
- DE-A1-102004 048 341
- DE-A1-102007 044 601
- DE-A1-102008 048 258
- DE-C- 740 043
- US-A1- 2009 096 212
- LEDESMA P ET AL: "Contribution of variable-speed wind turbines to voltage control", WIND ENGINEERING, MULTI-SCIENCE PUBLISHING CO., BRENTWOOD, ESSEX, GB, Bd. 26, Nr. 6, 1. Januar 2002 (2002-01-01) , Seiten 347-358, XP002360684, ISSN: 0309-524X, DOI: 10.1260/030952402765173349
- BRAUNER G: "NETZANBINDUNG VON WINDKRAFTANLAGEN", ELEKTROTECHNIK UND INFORMATIONSTECHNIK, SPRINGER VERLAG, WIEN, AT, Bd. 116, Nr. 7/08, 1. Januar 1999 (1999-01-01), Seiten 428-432, XP000926851, ISSN: 0932-383X

## Beschreibung

Die Erfindung bezieht sich auf ein Verfahren zum Betrieb eines ersten Energieerzeugers in einem elektrischen Energieversorgungsnetz, an das eine Vielzahl von elektrischen Verbrauchern und zumindest der erste Energieerzeuger, der insbesondere als regenerativer Energieerzeuger ausgestaltet ist, über je einen ihnen jeweils zugeordneten Netzverknüpfungspunkt angeschlossen sind, wobei wenigstens der erste Energieerzeuger einen Wechselrichter vorgegebener Nennleistung aufweist, dessen Wechselspannungsausgang mit einem ihm zugeordneten ersten Netzverknüpfungspunkt elektrisch verbunden ist, und wobei die Betriebsführung des Wechselrichters bezüglich seiner Blindleistungseinspeisung und/oder seines Blindleistungsbezugs in das oder aus dem Energieversorgungsnetz in Abhängigkeit von einem laufend gemessenen Netzspannungswert (N_{Netz}) erfolgt.

In der Praxis der öffentlichen Stromversorgung werden im Energieversorgungsnetz je nach Versorgungsspannungsebene, die in Deutschland zum Beispiel von 380 KV und 110KV als Hochspannungsebene, über 15 KV bis 70 KV als Mittelspannungsebene bis hinunter zu 230 Volt auf der Niederspannungsebene reicht, von den Energieversorgern oder Netzbetreibern mehr oder weniger enge Grenzen für die Strom- oder Spannungsqualität in Bezug auf den Blindleistungsanteil der Stromlieferanten und der Stromverbraucher, repräsentiert durch den cos phi Wert im Zeigerdiagramm von Strom und Spannung, gesetzt.

In Deutschland beträgt der zulässige Wert von cos phi für einen sanktionslosen Blindleistungsbezug oder eine Blindleistungseinspeisung 0,95. Diese Grenzsetzung dient der Stabilisierung der Netze, um eine Überspannung, die zu einer Zerstörung von angeschlossenen Verbrauchern führen kann, und eine Unterspannung, die zu einem Versagen von Verbrauchern führen kann, zu vermeiden. Als Regulativ zur Einhaltung der gesetzten cos phi Werte dient der Preis. So wird eine Einspeisung oder ein Bezug von Blindleistung außerhalb der von dem Energieversorger oder Obernetzbetreiber vorgegebenen Bandbreite für den cos phi mit erheblichen Strafzahlungen belegt.

Anlagen zur Erzeugung elektrischer Energie sind vielfältig bekannt. Jede Photovoltaikanlage, im Folgenden auch PV-Anlage genannt, erzeugt einen Gleichstrom, der mittels eines Wechselrichters in einen Wechselstrom umgewandelt und bei geeigneten Bedingungen in ein Energieversorgungsnetz eingespeist wird. Als Wechselrichter können sowohl rein elektronische Geräte als auch elektromechanische Umformer eingesetzt werden. Unter Wechselrichter sind dabei alle Vorrichtungen zu verstehen, welche aus einer Gleichspannung eine Wechselspannung erzeugen können. So erzeugen Windkraftanlagen zwar unmittelbar einen Wechselstrom. Dieser ist jedoch über einen Frequenzumformer an die Verhältnisse des öffentlichen Versorgungsnetzes (Energieversorgungsnetzes) anzupassen. Diese Frequenzumformer umfassen ebenfalls erfindungsgemäße Wechselrichter.

Die elektronischen Komponenten eines Wechselrichters, ebenso wie auch die Kombination einer Gleichstrommaschine mit einem Synchrongenerator als mechanischer Wechselrichter, erlauben die Einstellung eines gewünschten cos phi Wertes. Dies geschieht bei den meisten PV-Anlagen durch einen cos phi - Zeiger, über den ein festes Verhältnis von eingespeister Leistung zu eingespeister oder bezogener Blindleistung eingestellt werden kann. So wird der Regeleinheit z. B. vorgeschrieben, jegliche in das Netz eingespeiste Leistung mit einem cos phi von 0,97 einzustellen.

Aus der Deutschen Offenlegungsschrift DE 199 61 705 A1 ist beispielsweise ein Wechselrichter für eine Photovoltaikanlage bekannt, mittels dessen eine Solaranlage an ein Energieversorgungsnetz angeschlossen werden kann und der eine Regelungseinheit zur dynamischen Berechnung eines Kompensationsstromes zur Kompensation von Oberschwingungen und Blindleistung im Netz aufweist. Durch den Betrieb des Wechselrichters mit der Regelungseinheit soll die Netzspannungsqualität in dem Energieversorgungsnetz verbessert werden.
Die Regelungseinheit berechnet einen Kompensationsstrom-Sollwert aufgrund eines gemessenen Netzspannungswertes. Dabei wird das Messglied der Netzspannungsmessung an demjenigen Verknüpfungspunkt angeordnet, an dem der Wechselrichter die Energie in das Netz einspeist.

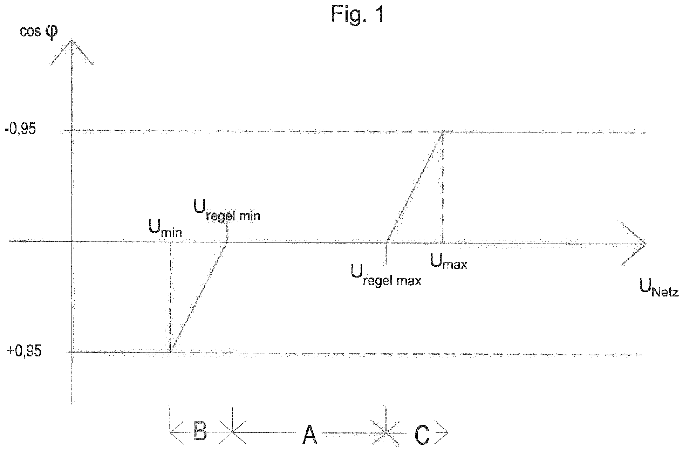

Bei größeren und modernen Anlagen wird der cos phi Wert nicht notwendig fest vorgegeben, sondern kann im Betrieb nach einem Diagramm entsprechend der Fig. 1 dynamisch je nach den augenblicklichen Erfordernissen eingestellt werden. Dort ist ein einzustellender cos phi-Wert (cos ϕ) am Ausgang des Wechselrichters über die Netzspannung aufgetragen. Die Ausgangsspannung U_{Netz} zur Einspeisung in das Netz darf nur innerhalb eines Bereichs zwischen dem minimalen Wert Uₘᵢₙ und einem maximalen Wert Uₘₐₓ variieren. Außerhalb dieses vom Energieversorger zugelassenen Bereichs der Einspeisung in das Netz mit einem cos phi von z. B. maximal 0,95 sollte die PV-Anlage nicht betrieben werden. Innerhalb dieses zulässigen Bereichs liegt ein engerer Bereich zwischen einer minimalen Regelspannung U_{regel min} und einer maximalen Regelspannung U_{regel max}, in welchem reine Leistung ohne eine Blindleistungskomponente an das Netz abgegeben werden kann. In der Mitte dieses engeren Bereichs liegt die Sollspannung Uₛₒₗₗ.

Die Erfindung geht nun von der Überlegung aus, dass es für einen Netzbetreiber oder Energieversorger sinnvoll sein kann, die im Netz agierenden Energieerzeuger und/oder Energieverbraucher derart aufeinander abzustimmen, das einzelne Anlagen von Netzteilnehmern, die von dem Netzbetreiber oder Energieversorger administrativ oder in der Betriebsführung zusammengefasst werden können, um beispielsweise ein virtuelles Kraftwerk zu bilden, bezüglich des cos phi ungünstiger betrieben werden, um im Zusammenspiel mit anderen Elementen insgesamt günstigere Bedingungen im Verhältnis von Blindleistung und Wirkleistung zu schaffen und eigene, drohende Strafgebühren an den übergeordneten Netzbetreiber zu vermeiden.
So sind Energieversorger vor allem in ihrem Vertragsverhältnis zum Obernetzbetreiber (z.B. Atomkraftwerk, Kohlekraftwerk etc. als Energielieferant) vertraglich dazu verpflichtet, einen Blindleistungsbezugswert von cos phi 0,95 nicht zu unterschreiten, um die Spannungsstabilität in dem überregionalen Obernetz sicher zu stellen. Ein Bezug von Blindleistung ist aber oftmals in den unteren Netzen erforderlich, um einen Spannungsanstieg durch die Einspeisung von Solar- und Windkraftstrom zu kompensieren oder einen Spannungsabfall durch ausfallende Lieferung von alternativ erzeugter Energie oder das Anfahren von Maschinen zu kompensieren.
Entsprechend liegt vorliegender Erfindung die Aufgabe zugrunde, einen Beitrag zur Erhöhung der Versorgungsqualität in einem elektrischen Energieversorgungsnetz zu leisten.

Diese Aufgabe wird gelöst durch das Verfahren nach Anspruch1 und die Schaltungsanordnung nach Anspruch 12.

Ausführungsbeispiele zeigen, dass der Netzspannungswert (N_{Netz}) zur Betriebsführung des ersten Energieerzeugers an einem zweiten Netzverknüpfungspunkt gemessen wird, welcher von dem ersten Netzverknüpfungspunkt des Energieerzeugers verschieden ist.
Damit liegt der Betriebsführung des Wechselrichters eines ersten Energieerzeugers nicht mehr der lokal am Ort des ersten Energieerzeugers gemessene Netzspannungswert zugrunde, sondern ein an geeigneter Stelle, nämlich einem zweiten Netzverknüpfungspunkt im Energieversorgungsnetz gemessener Wert. Es kann somit das kritische Verhältnis von Wirkleistung und Blindleistung unter Berücksichtigung von übergeordneten Gesichtspunkten und unter stärkerer Beachtung des Einflusses anderer Netzteilnehmer optimiert werden, als wenn lediglich die lokalen Größen am Ort (ersten Netzverknüpfungspunkt) des ersten Energieerzeugers selbst herangezogen würden. Es sollen somit auch brachliegende Möglichkeiten der Nutzung von am Netz angeschlossenen Wechselrichtern als Blindleistungslieferant oder -bezieher ausgenutzt werden.

Dabei kann beispielsweise der zweite Netzverknüpfungspunkt mit einem Punkt der Verbindung des Energieversorgungsnetzes mit einem diesem übergeordneten Energieversorgungsnetz identisch oder diesem jedenfalls näher sein als der erste Netzverknüpfungspunkt. Damit kann dann die Regelung des ersten Energieerzeugers auf einen optimierten cos phi eines gesamten Unternetzes gerichtet sein.

Eine vorteilhafte Ausgestaltung der Erfindung sieht dabei vor, dass das Energieversorgungsnetz verschiedene Bereiche auf unterschiedlichen Spannungsebenen aufweist, und dass der zweite Netzverknüpfungspunkt auf einer anderen Spannungsebene angeordnet ist als der erste Netzverknüpfungspunkt des Wechselrichters. Durch diese Ausgestaltung kann die Optimierung der Versorgungsspannungsqualität auch über mehrere Netzspannungsebenen hinweg optimiert werden.

Grundsätzlich kann jeder Wechselrichter, der bei maximaler Leistung arbeitet, nur einen definierbaren Blindleistungsbetrag leisten, der größer oder gleich cos phi = 0,95 sein muss. Befindet sich dieser Wechselrichter z.B. an einem Betriebspunkt, an dem nur die halbe Nennleistung generierbar ist, so würde unter dem normalen Regelschema nur der halbe Blindleistungsbetrag lieferbar oder beziehbar sein. Der Wechselrichter könnte aber von seinen technischen Möglichkeiten her einen höheren KVAR-Betrag liefern. Dazu müssen aber die Gegebenheiten zu den aktuellen Spannungsverhältnissen im Energieversorgungsnetz auch entfernt von dem ersten Netzverknüpfungspunkt bekannt sein, damit sein KVAR-Beitrag nicht kontraproduktiv wirkt.

Die erfindungsgemäße Betriebsführung des Wechselrichters in Abhängigkeit einer aus seiner Sicht externen Spannung, was einer Spannung an einem netztopologisch, insbesondere auch geographisch anderen Ort im Versorgungsnetz entspricht, erlaubt den Betreibern regenerativer Energieanlagen der genannten Art ihre Möglichkeiten, die der Wechselrichter zur cos phi Variation bietet, nutzbringend für einen größeren Bereich des Energieversorgungsnetzes einzubringen.

Es kann vorteilhaft vorgesehen sein, dass zwischen dem ersten Netzverknüpfungspunkt und dem zweiten Netzverknüpfungspunkt wenigstens ein, insbesondere wenigstens zwei, vorteilhaft wenigstens drei, weiter vorteilhaft wenigstens fünf weitere Netzverknüpfungspunkte und/oder ein Transformator angeordnet ist/sind.

Es kann weiter vorteilhaft sein, dass zwischen dem ersten Netzverknüpfungspunkt und dem zweiten Netzverknüpfungspunkt wenigstens ein Netzverknüpfungspunkt eines kapazitiven oder induktiven Verbrauchers angeordnet ist.

Eine weitere vorteilhafte Ausgestaltung der Erfindung sieht vor, dass die Betriebsführung des Wechselrichters auf eine Optimierung, insbesondere Maximierung der in das Energieversorgungsnetz abgegebenen Wirkleistung (Betrieb am maximalen Leistungspunkt MMP) ausgerichtet ist. Dabei wird insbesondere ein bestimmter absoluter oder maximaler vorgebbarer Blindleistungswert oder ein bestimmter Blindleistungsanteil (Einspeisung oder Bezug) oder maximaler Blindleistungsanteil von der Wirkleistung eingehalten.

So wird der Blindleistungsbetrag (bei Vorgabe eines absoluten Wertes) auf die bis zur Erreichung der Nennleistung des Wechselrichters verbleibende Leistung beschränkt. Dadurch wird die vom Energieerzeuger selber generierte Energie nicht eingeschränkt oder reduziert. Die freie Leistungskapazität des Wechselrichters wird lediglich zur Erfüllung einer weiterer Funktion, nämlich die des Phasenschiebers oder Blindleistungslieferanten herangezogen. Wird der Blindleistungsanteil als Sollwert oder Maximalgrenze vorgeschrieben, so können die Betriebsbedingungen des Wechselrichters und des ersten Energieerzeugers trotz der Orientierung an übergeordneten Qualitätszielen der Versorgungsspannung dennoch in Grenzen optimiert werden.

Es kann auch vorgesehen sein, dass die Betriebsführung des Wechselrichters vorsieht, unter Umgehung der ihm inhärenten Regeleinrichtung hin zu dem maximalen Leistungspunkt MPP einen vorgebbaren Blindleistungsanteil in die Versorgungsebene einzuspeisen oder aus ihr zu beziehen. Dieses ist sinnvoll, wenn es aufgrund der aktuellen Netzverhältnisse für den Solaranlagenbetreiber lukrativer ist Blindleistung zu liefern, als für den Antrieb von Maschinen, dem Betrieb von Klimaanlagen etc. nutzbare Leistung.

Es kann gemäß einer Ausführungsform der Erfindung auch vorgesehen sein, dass die Betriebsführung des Wechselrichters auf eine Optimierung, insbesondere Maximierung der in das Energieversorgungsnetz abgegebenen Wirkleistung (Betrieb am maximalen Leistungspunkt MMP) ausgerichtet ist, wobei er zusätzlich eine Blindleistungsmenge in das Energieversorgungsnetz einspeist oder aus ihm bezieht, die maximal der Differenz der aktuell gelieferten Wirkleistung zur Nennleistung des Wechselrichters entspricht. Damit kann, wenn beispielsweise feststeht, dass eine Phasenverschiebung in einem bestimmten Sinn im Energieversorgungsnetz benötigt wird, sichergestellt werden, dass der erste Energieerzeuger stets den vollen ihm möglichen Beitrag zur Erreichung der Phasenvershiebung und damit zur Verbesserung der Netzqualität liefert.

Ein besonders geeigneter Ort für die Messung des Netzspannungswerts (U_{Netz}) ist bei einem Netzverknüpfungspunkt am Ende einer Stichleitung oder in Bezug zu einem eine Ringleitung speisenden Netztransformator in der Mitte der Ringleitung. Dort befinden sich die Verbraucher, die die niedrigste Netzspannung zur Verfügung haben. Aufgrund der bezüglich der Energieeinspeisung in das Netz vor ihnen liegenden anderen Verbraucher, die alle einen marginalen Spannungsabfall bewirken, ist dort die verfügbare Spannung in der Regel am niedrigsten, es sei denn ein zusätzlicher Energielieferant (im Zusammenhang der vorliegenden Anmeldung auch "Energieerzeuger" genannt, obwohl selbstverständlich nicht von einer Erzeugung von Energie, sondern lediglich von einer Umwandlung in elektrische Energie die Rede sein kann) ist in der Nähe angeschlossen. Die Begriffe "am Ende einer Stichleitung" und "in Bezug zu einem eine Ringleitung speisenden Netztransformator in der Mitte der Ringleitung" sind dabei im Lichte der folgenden Ausführungen zu interpretieren.

Ist zum Beispiel eine Stichleitung mit 200 Anknüpfungspunkten gegeben, so umfasst das Ende der Stichleitung die letzten 20%, insbesondere die letzten 10%, der Anknüpfungspunkte. Also sind die letzen 40, insbesondere die letzten 20 Anknüpfungspunkte, am Ende der Stichleitung angeordnet. Analog wären bei einer Ringleitung von 200 Anknüpfungspunkten die jeweils 20, insbesondere die jeweils 10 links und rechts der Mitte (die von einem Netzverknüpfungspunkt der Ringleitung aus gezählt zwischen dem 100-ten und dem 101-ten Anknüpfungspunkt liegt) liegenden Anknüpfungspunkte zu sehen.

Es kann generell der spannungssensibelste Netzverknüpfungspunkt als zweiter Netzverknüpfungspunkt gewählt werden, an dem der Netzspannungswert (N_{Netz}) zur Betriebsführung des Wechselrichters des ersten Energieerzeugers gemessen wird. Dies kann ein Ort sein, an dem sich ein Verbraucher befindet, der schwere Maschinen mit hohem Anlaufstrom betreibt, die häufig an- und abgeschaltet werden.

Es kann somit für die Messung derjenige Netzverknüpfungspunkt eines Netzteilnehmers mit dem größten Abweichungszeitintegral von dem zeitlich gemittelten Blindleistungsanteil gewählt werden. Eine andere Alternative bei der Ausgestaltung der Erfindung besteht darin, dass der Verbraucher mit der höchsten Schwankungsbreite beim Blindleistungsbezug ermittelt wird, und dass die Messung des Netzspannungswertes (N_{Netz}) am Netzverknüpfungspunkt dieses Verbrauchers erfolgt.

Die Betriebsführung des Wechselrichters des ersten Energieerzeugers ist derart, dass eine gemessene Unterspannung unterhalb eines Schwellwerts zu einer Einspeisung von Blindleistung seitens des Wechselrichters führt. Eine drohende Überspannung, z.B. bei Erreichen eines oberen Schwellwerts, führt zu einem Bezug von Blindleistung durch den Wechselrichter.

Eine großflächigere Überwachung und Optimierung des Spannungszustands in dem Energieversorgungsnetz wird dadurch erreicht, dass die Netzspannung (U_{Netz}) an den Netzverknüpfungspunkten (1 bis n) von mehreren Verbrauchern auf derselben Spannungsebene ermittelt wird und die Betriebsführung anhand der entsprechend mehreren Netzspannungswerte (U_{Netz 1}) bis (U_{Netz n}) insbesondere anhand eines durch Verknüpfung verschiedener Netzspannungswerte (U_{Netz 1} bis U_{Netz n}) ermittelten konstruierten Netzspannungswertes (U_{Netz}), erfolgt.

Die verschiedenen Netzspannungswerte (U_{Netz 1} bis U_{Netz n}) können beispielsweise durch Mittelwertbildung zu einem Netzspannungswert (U_{Netz}) verknüpft werden, wobei insbesondere bestimmte Netzspannungswerte (U_{Netz i}) beispielsweise von Netzteilnehmern mit größerer Wirkleistungseinspeisung/Wirkleistungsabnahme oder geringerer Blindleistungsschwankung stärker gewichtet werden als andere Netzteilnehmer mit geringerer Wirkleistungseinspeisung/Wirkleistungsabnahme oder höherer Blindleistungsschwankung. Die Gewichtung kann auch derart gestaltet sein, dass eine Netzspannung an einem Netzverknüpfungspunkt, der dem Verbindungspunkt des Energieversorgungsnetzes mit einem Obernetz näher ist als andere Netzverknüpfungspunkte, bei einer Mittelwertbildung stärker gewichtet wird als die an den anderen Netzverknüpfungspunkten gemessenen Netzspannungswerte.

Es kann auch vorgesehen sein, dass die Verknüpfung der Netzspannungswerte zeitlich veränderlich ist, und dass jeweils ein gemessener Netzspannungswert mit höherer Änderungsgeschwindigkeit des cos phi stärker gewichtet wird als Netzspannungswerte mit geringerer Änderungsgeschwindigkeit des cos phi.

Als Verbraucher kann im Rahmen der vorliegenden Erfindung auch ein Unterversorgungsnetz angesehen werden, dass von einem spannungsmäßig höher liegenden (Ober-)Versorgungsnetz bedient wird. So kann z.B. ein Transformator, der von einer 5 KV Ebene auf eine 380 Volt Ebene herunterspannt und eine Ortschaft mit Strom versorgt, als Verbraucher für das übergeordnete 5 KV Netz angesehen werden. Gegebenenfalls wird die Spannung am Transformator gemessen und zur Betriebsführung beispielsweise einer Photovoltaikgroßanlage herangezogen, deren Wechselrichtergeräte oder Wechselrichtermaschinen direkt oder über einen zugehörigen Transformator in die Mittelspannungsebene einspeisen.

Bei Vorliegen von mehreren Lieferanten regenerativer Energie mit jeweils zugeordnetem Netzverknüpfungspunkt in dasselbe Versorgungsnetz kann es vorteilhaft sein, dass der zu liefernde Blindleistungsanteil auf die entsprechend mehreren Wechselrichter derart aufgeteilt wird, dass die beteiligten Wechselrichter in Summe möglichst verlustarm arbeiten. Dies ermöglicht eine effiziente Ausnutzung der verfügbaren Blindleistungskapazitäten. Aus demselben Grund ist es angebracht, dass derjenige Energieerzeuger bevorzugt zur Blindleistungseinspeisung oder zum Blindleistungsbezug herangezogen wird, der demjenigen Netzverknüpfungspunkt, an dem der Spannungswert ermittelt wird und der sich einem kritischen Wert nähert, räumlich und/oder netztopologisch benachbart ist.

Zum Schutz des Wechselrichters und der Photovoltaikanlage weist die Regeleinheit einen Begrenzer auf, der den vorgegebenen Blindleistungsbetrag dahingehend reduziert, dass eine maximal zulässige Spannung am Ausgang des Wechselrichters nicht überschritten wird. Ebenso ist es sinnvoll, die Regeleinheit mit der Möglichkeit zu versehen, den vorgegebenen Blindleistungsbetrag derart zu steuern, dass eine minimal zulässige Spannung am Eingang des Wechselrichters nicht unterschritten wird.

Die Erfindung umfasst außer einem Verfahren zum Betrieb eines ersten Energieerzeugers auch ein entsprechendes Verfahren zum Betrieb mehrerer Energieerzeuger in einem Energieversorgungsnetz, wobei wenigstens zwei regenerative Energieerzeuger über diesen jeweils zugeordnete Netzverknüpfungspunkte in eine einzige Spannungsebene einspeisen, und wobei ihr jeweiliger zu liefernder Blindleistungsanteil auf die ihnen jeweils zugeordneten Wechselrichter derart aufgeteilt wird, dass die Verlustleistung der Wechselrichter in Summe minimiert ist.

Es kann weiter im Rahmen der Erfindung vorgesehen sein, dass bei wenigstens zwei zu steuernden Energieerzeugern derjenige Energieerzeuger bevorzugt zur Blindleistungseinspeisung oder zum Blindleistungsbezug herangezogen wird, der dem Netzverknüpfungspunkt, an dem der Netzspannungswert (U_{Netz}) ermittelt wird, räumlich oder netztopologisch am nächsten ist.

Durch ein solches übergeordnetes Verfahren zum Betrieb mehrerer Energieerzeuger in einem Energieversorgungsnetz, kann der Nutzen des gesamten Energieversorgungsnetzes gegenüber dem optimierten Betriebes von einzelnen Energieerzeugern priorisiert werden.

Zudem bezieht sich die Erfindung auch auf eine Schaltungsanordnung mit einem Energieerzeuger für ein Energieversorgungsnetz, der einen Wechselrichter sowie eine Regelungseinrichtung für den Wechselrichter aufweist. Der Ausgang des Wechselrichters ist mit einem ersten Netzverknüpfungspunkt zur Einspeisung von elektrischer Leistung in das Energieversorgungsnetz verbunden. Die Regeleinrichtung ist mit einem zweiten Netzverknüpfungspunkt verbunden, der von dem ersten Netzverknüpfungspunkt verschieden und von diesem beabstandet ist.

Eine derartige Schaltungsanordnung erlaubt einen Betrieb gemäß den oben näher ausgeführten Verfahrensvarianten zum Vorteil der verbesserten Versorgungsqualität eines Energieversorgungsnetzes.

Bei der Ausgestaltung der genannten Schaltungsanordnung kann vorteilhaft vorgesehen sein, dass zwischen dem ersten Netzverknüpfungspunkt und dem zweiten Netzverknüpfungspunkt wenigstens ein weiterer, insbesondere wenigstens zwei weitere, vorteilhaft wenigstens fünf weitere Netzverknüpfungspunkte mit an diese angeschlossenen Verbrauchern und/oder weiteren Energieerzeugern angeordnet sind.

Eine Schaltungsanordnung kann auch mit wenigstens zwei Energieerzeugern für ein Energieversorgungsnetz versehen sein, die jeweils einen Wechselrichter sowie eine Regelungseinrichtung für den Wechselrichter aufweisen. Die Ausgänge der Wechselrichter sind mit einem ersten und einem dritten Netzverknüpfungspunkt zur Einspeisung von elektrischer Leistung in das Energieversorgungsnetz verbunden. Die Regeleinrichtungen sind mit einem zweiten und entsprechend einem vierten Netzverknüpfungspunkt verbunden, die jeweils von dem ersten und zweiten Netzverknüpfungspunkten verschieden und von diesen beabstandet sind.

Diese Schaltungsanordnung mit zwei oder auch mehr Energieerzeugern ermöglicht eine Optimierung des Betriebes durch ein optimiertes Zusammenwirken bei der Steuerung/Regelung der durch die einzelnen Energieerzeuger und die ihnen zugeordneten Wechselrichter eingestellten Blindleistungsanteile.

Nachfolgend werden Ausführungsbeispiele der Erfindung anhand einer Zeichnung näher erläutert. Darin zeigen:
- Fig. 1: ein Regelschema eines Wechselrichters einer Solaranlage zur Einstellung eines cos phi Werts (cos ϕ) über die Ausgangsspannung,
- Fig. 2: eine Ringleitung mit einem Versorgungstransformator und Netzverknüpfungspunkten,
- Fig. 3: eine Stichleitung mit einem Versorgungstransformator und Netzverknüpfungspunkten, und
- Fig. 4: zwei Versorgungsebenen mit Energieverbrauchern und Energieerzeugern.

In Fig. 1 ist ein solches Regelschema des cos phi (cos ϕ) über die Wechselrichterlausgangs-Spannung U dargestellt, das prinzipiell bei modernen PV-Anlagen vorteilhaft zur Anwendung kommt und das Verständnis der sich anschließenden Beschreibung erleichtern soll.

Es sind zwei Grenzwerte Uₘᵢₙ und Uₘₐₓ vorgesehen, die generell nicht unter- bzw. überschritten werden sollen. Zwischen diesen Randgrenzwerten Uₘᵢₙ und Uₘₐₓ liegt ein linearer Regelbereich A, der von zwei Regelgrenzwerten U_{regel min} und U_{regel max} eingegrenzt ist. In diesem Bereich A wird die Anlage cos phi neutral gefahren, und es wird reine Wirkleistung in das Versorgungsnetz eingespeist. Liegt der Betriebspunkt des Wechselrichters mit seiner Ausgangsspannung U im Bereich B zwischen Uₘᵢₙ und U_{regel min}, so wird zusätzlich Blindleistung kVAr (kVAr: Messeinheit Kilovolt-Ampere reactive) in das Versorgungsnetz geliefert.

Analog wird bei einem Betriebspunkt des Wechselrichters mit einer Ausgangsspannung U im Bereich C zwischen Uₘₐₓ und U_{regel max} zusätzlich zur Leistungseinspeisung Blindleistung kVAr dem Versorgungsnetz entnommen. Der Betriebspunkt ist dabei über die Halbleiterelemente, insbesondere IGBT's (Insulated-Gate Bipolar Transistor), also Bipolartransistoren mit isolierter Gate-Elektrode, im Wechselrichter einstellbar und wird über einen sogenannten MPP-Regler (MPP: **M**aximum **P**ower **P**oint) eingestellt. Der MPP-Regler nutzt dabei die gesamte Spannungsbandbreite zwischen Uₘᵢₙ und Uₘₐₓ aus, um möglichst viel nutzbare elektrische Wirkleistung am PV-Generator zu erzeugen. An den beiden oberen und unteren Grenzwerten bestehen zusätzliche Notfallflanken, auf die hier nicht weiter eingegangen werden soll.

Je nach Betriebspunkt ergibt sich demnach unter Umständen ein Blindleistungsbezug aus dem Netz, was generell eine Tendenz zur Spannungssenkung der Netzspannung bedeutet. Es kann sich auch eine Blindleistungseinspeisung ergeben, was gleichbedeutend ist mit einer Spannungsanhebung auf der Versorgungsebene, an die der Wechselrichter angeschlossen ist.

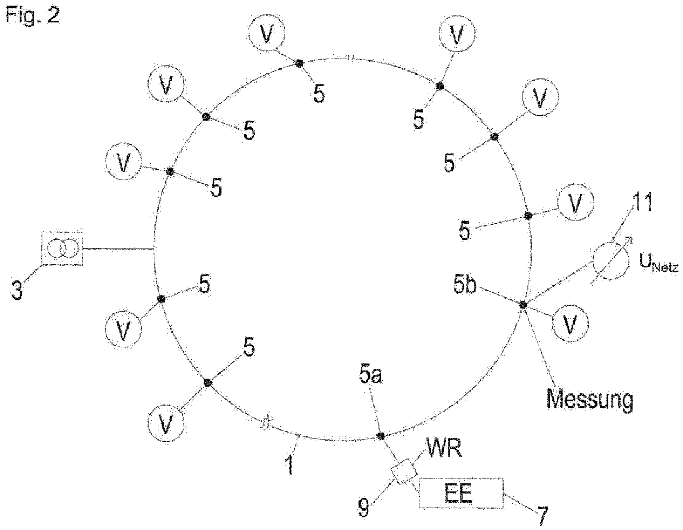

In Fig. 2 ist eine Ringleitung 1 gezeigt, die von einem Transformator 3 mit elektrischem Strom versorgt wird. Auf der Ringleitung 1 sind eine Vielzahl von Netzverknüpfungspunkten 5 vorhanden, die je einen Anschlusspunkt für Verbraucher V oder Energieerzeuger EE darstellen, wie beispielsweise einen Photovoltaikgenerator 7 mit seinem ihm zugeordneten Wechselrichter 9. Beispielsweise handelt es sich bei dem Transformator 3 um einen Mittelspannungstransformator, der von einer übergeordneten 20 kV Versorgungsebene herunterspannt auf eine 400 Volt Unterspannungsebene, und der dementsprechend ein Oberversorgungsnetz (20kV) mit einem Unterversorgungsnetz (400 V) verbindet.

Die einzelnen Verbraucher V sind private Haushalte, Handwerksbetriebe, gewerbliche Geschäfte wie Supermärkte, Baumärkte, kleinere Industriebetriebe etc.. Insgesamt sollen im Beispiel 200 Verbraucher V und Energieerzeuger EE über entsprechend 200 zugeordnete Netzverknüpfungspunkte 5 mit der Ringleitung 1 verbunden sein. Dabei kann ein Verbraucher V auch zeitweise als Energieerzeuger EE auftreten. Insbesondere der letztere Fall, der die PV-Dachanlagen auf Scheunendächern, Industriehallendächern, Privathausdächern etc. anspricht, führt zu einer unerwünschten Beeinflussung der Netzspannung über die kVAr Lieferung oder den kVAr Bezug der den Dachanlagen zugeordneten Wechselrichter. Dadurch neigt das Versorgungsnetz, hier speziell die Spannung auf der Ringleitung 1, zur Instabilität.

Diese Instabilität ist in der Nähe des Einspeiseverknüpfungspunktes 5 des Transformators 3 gering und wird umso größer, je weiter der Verbraucher V von dem Einspeisepunkt entfernt liegt. Jeder Verbraucher V trägt tendenziell dazu bei, die Spannungsstabilität zu schwächen. In der Mitte der Ringleitung 1, also in der Nähe des 100-sten Verbrauchers V kann es dann unter ungünstigen Bedingungen zu einem Spannungsabfall kommen, der den Gebrauch von elektrischen Geräten beeinträchtigt. Dieses äußert sich z.B. durch ein Lichtflackern, wenn bei dem Verbraucher V oder in seiner Nähe zusätzlich eine elektrische Maschine in Betrieb genommen wird.

Diesem unerwünschten Spannungsabfall kann durch eine Blindleistungslieferung entgegengewirkt werden. Dazu wird ein großer Energieeinspeiser/Energieerzeuger EE, der über einen eigenen Netzverknüpfungspunkt 5a mit der Ringleitung 1 verbunden ist, von seiner rein leistungsoptimierten Betriebsführung abgebracht. Dies geschieht dadurch, dass der Betriebspunkt des Wechselrichters 9 derart modifiziert wird, dass er zusätzlich oder auch ausschließlich Blindleistung kVAr alleine zu dem Zweck in die Ringleitung 1 einspeist, um deren Spannung zu stabilisieren. Dabei kann der Stabilisierungsbetrieb für das Gesamtnetz gesehen wertvoller sein, als eine Wirkleistungseinspeisung. Die Information, wann und in welcher Weise der Betriebspunkt des Wechselrichters 9 zu verändern ist, bezieht der Wechselrichter 9 dabei von einem Spannungsmessgerät 11. Dieses ist an einen anderen Netzverknüpfungspunkt 5b (einem zweiten Netzverknüpfungspunkt) als demjenigen angeschlossen, mit dem der Photovoltaikgenerator 7 als Energieerzeuger EE verbunden ist (dem ersten Netzverknüpfungspunkt). Der andere (zweite) Netzverknüpfungspunkt 5b liegt vorzugsweise in der Mitte der Ringleitung 1, kann aber auch ein Netzverknüpfungspunkt 5 an anderer Stelle sein, der einem besonders labilen Verbraucher V zugeordnet ist, in dessen Betrieb viele elektrische Maschinen häufig anzufahren sind.

Die Information über die herrschende Spannung in der Nähe des oder am schwächsten Verbraucher V wird als Netzspannungswert von der Spannungsmesseinrichtung 11 dem Wechselrichter 9 zur Verfügung gestellt. Dies erfolgt leitungsgebunden oder drahtlos über an sich bekannte Techniken, beispielsweise auch über ein digitales Kommunikationsnetz, insbesondere auch ein Funknetz.

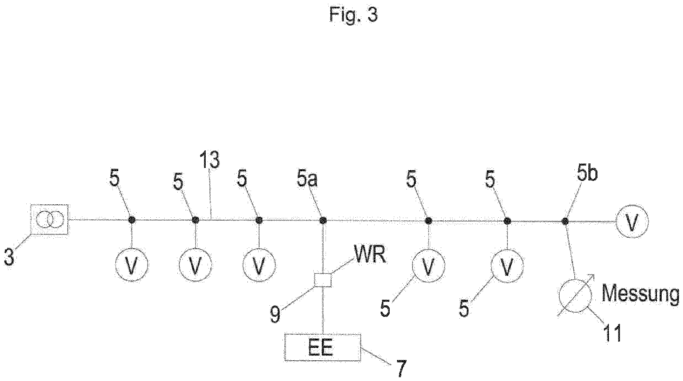

In Fig. 3 sind gleiche Teile mit denselben Bezugszeichen versehen wie in den übrigen Figuren, wobei anstelle der Ringleitung 1 nunmehr eine Stichleitung 13 vorliegt. Auch hier sind viele Verbraucher V an die Stichleitung 13 angeschlossen, wobei der schwächste Verbraucher V am Ende der Stichleitung 13 über einen Netzverknüpfungspunkt 5b mit der Stichleitung verbunden ist. Dort wird auch der Netzspannungswert an einer Spannungsmesseinrichtung 11 ermittelt, um ihn an den Wechselrichter 9 der Photovoltaikanlage 7 zur Betriebsführung weiterzuleiten. Alle vorherigen Ausführungen zur Ringleitung 1 gelten analog auch für die Stichleitung 13 nach der Fig. 3.

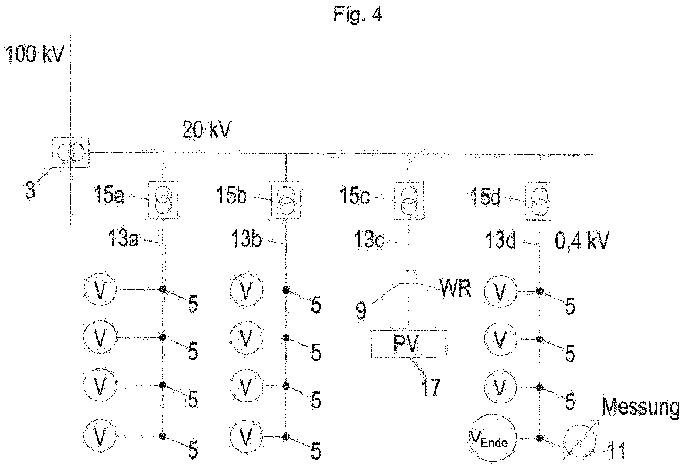

In Fig. 4 ist eine weitere Variante des Erfindungsgedankens gezeigt. Dort ist ein erster Transformator 3 vorhanden, der von einer 110 kV Spannungsebene heruntertransformiert auf eine 20 kV Ebene, von welcher eine Vielzahl von weiteren Transformatoren 15a bis 15d über zugeordnete Netzverknüpfungspunkte 5' gespeist werden. Die weiteren Transformatoren 15a bis 15d transformieren die Spannung jeweils auf 400 Volt. Von drei (15a, 15b, 15d) der weiteren Transformatoren 15 geht je eine Stichleitung 13a bis 13d mit mehreren, an Netzverknüpfungspunkten 5 angeschlossenen Verbrauchern V und/oder Kleinerzeugern EE von regenerativer Energie ab. Jede der Stichleitungen 13a, 13b und 13d ist im Prinzip entsprechend der Fig. 3 aufgebaut. Der letzte Verbraucher V_{Ende} an der hintersten Stichleitung 13d, die am weiteren Transformator 15d angeschlossen ist, ist mit einer Spannungsmessvorrichtung 11 versehen, um den dort herrschenden Netzspannungswert zu ermitteln.

Die Stichleitung 13c, die vom weiteren Transformator 15c abgeht, führt zu einem Solarkraftwerk 17 und dient ausschließlich zum Anschluss dessen Wechselrichters 9, um die erzeugte Energie direkt in die Mittelspannungsebene von 20 kV einzuspeisen.

Abweichend von den Fig. 2 und 3 befindet sich hier die Messeinrichtung 11 für die Messung des Netzspannungswertes für die Betriebsführung des Wechselrichters auf einer anderen Spannungsebene (z.B. der 400 Volt Ebene) als diejenige, an der der Wechselrichter 9 angeschlossen ist, d.h. hier die 20 kV Ebene. Es wird also auf einer anderen Spannungsebene die Blindleistung kVAr eingespeist oder bezogen, als diejenige Spannungsebene, auf der die Regelgröße "Netzspannungswert" ermittelt wird. Dabei wird davon ausgegangen, dass nicht nur dem Verbraucher V_{Ende}, sondern auch allen anderen Verbrauchern V, die an die Netzverknüpfungspunkte 5' der 20 kV Spannungsebene angeschlossen sind, z.B. eine Unterspannung droht und allen diesen Verbrauchern eine Anwendung des erfindungsgemäßen Verfahrens in Bezug auf die Spannungsversorgungsqualität zugute kommt.

### Bezugszeichenliste

- 1: Ringleitung
- 3: Transformator
- 5,5': Netzverknüpfungspunkt
- 7: Photovoltaikgenerator
- 9: Wechselrichter
- 11: Spannungsmesseinrichtung
- 13: Stichleitung
- 15: Transformator
- 17: Solarkraftwerk

## Patentansprüche

1. Verfahren zum Betrieb eines ersten Energieerzeugers (EE) in einem elektrischen Energieversorgungsnetz, an das eine Vielzahl von elektrischen Verbrauchern (V) und zumindest der erste Energieerzeuger (EE), der insbesondere als regenerativer Energieerzeuger ausgestaltet ist, über je einen ihnen jeweils zugeordneten Netzverknüpfungspunkt (5) angeschlossen sind,
- wobei wenigstens der erste Energieerzeuger (EE) einen Wechselrichter (9) vorgegebener Nennleistung aufweist, dessen Wechselspannungsausgang mit einem ihm zugeordneten ersten Netzverknüpfungspunkt (5) elektrisch verbunden ist,
- wobei die Betriebsführung des Wechselrichters (9) bezüglich seiner Blindleistungseinspeisung und/oder seines Blindleistungsbezugs in das oder aus dem Energieversorgungsnetz in Abhängigkeit von einem laufend gemessenen Netzspannungswert (N_{Netz}) erfolgt,
- wobei der Netzspannungswert (N_{Netz}) an einem zweiten Netzverknüpfungspunkt gemessen wird, welcher von dem ersten Netzverknüpfungspunkt des Energieerzeugers (EE) verschieden ist,
- wobei zwischen dem ersten Netzverknüpfungspunkt und dem zweiten Netzverknüpfungspunkt wenigstens ein weiterer Netzverknüpfungspunkt angeordnet wird, und
- wobei die Netzspannung (U_{Netz}) an den Netzverknüpfungspunkten (5) von mehreren Verbrauchern (V) auf derselben Spannungsebene ermittelt wird und die Betriebsführung anhand der entsprechend mehreren Netzspannungswerte (U_{Netz 1}), (U_{Netz n}), insbesondere anhand eines durch Verknüpfung verschiedener Netzspannungswerte (U_{Netz 1} bis U_{Netz n}) ermittelten konstruierten Netzspannungswertes (U_{Netz}), erfolgt.

2. Verfahren nach Anspruch 1, bei dem das Energieversorgungsnetz verschiedene Bereiche auf unterschiedlichen Spannungsebenen aufweist, und bei dem der zweite Netzverknüpfungspunkt auf einer anderen Spannungsebene angeordnet ist als der erste Netzverknüpfungspunkt des Wechselrichters (9).

3. Verfahren nach Anspruch 1 oder 2, bei dem zwischen dem ersten Netzverknüpfungspunkt und dem zweiten Netzverknüpfungspunkt wenigstens zwei, vorteilhaft wenigstens drei, weiter vorteilhaft wenigstens fünf weitere Netzverknüpfungspunkte und/oder ein Transformator angeordnet ist/sind.

4. Verfahren nach Anspruch 1, 2 oder 3, bei dem zwischen dem ersten Netzverknüpfungspunkt und dem zweiten Netzverknüpfungspunkt wenigstens ein Netzverknüpfungspunkt eines kapazitiven oder induktiven Verbrauchers angeordnet ist.

5. Verfahren nach Anspruch 1 oder 2, 3 oder 4, bei dem die Betriebsführung des Wechselrichters (9) auf eine Optimierung, insbesondere Maximierung der in das Energieversorgungsnetz abgegebenen Wirkleistung (Betrieb am maximalen Leistungspunkt MMP) ausgerichtet ist, wobei insbesondere ein bestimmter absoluter oder maximaler vorgebbarer Blindleistungswert oder ein bestimmter Blindleistungsanteil (Einspeisung oder Bezug) oder maximaler Blindleistungsanteil von der Wirkleistung eingehalten wird.

6. Verfahren nach Anspruch 1 oder 2, 3 oder 4, bei dem die Betriebsführung des Wechselrichters (9) auf eine Optimierung, insbesondere Maximierung der in das Energieversorgungsnetz abgegebenen Wirkleistung (Betrieb am maximalen Leistungspunkt MMP) ausgerichtet ist, wobei er zusätzlich eine Blindleistungsmenge in das Energieversorgungsnetz einspeist oder aus ihm bezieht, die maximal der Differenz der aktuell gelieferten Wirkleistung zur Nennleistung des Wechselrichters (9) entspricht.

7. Verfahren nach einem der Ansprüche 1 bis 6, bei dem der Netzspannungswert (U_{Netz}) bei einem Netzverknüpfungspunkt (5) am Ende einer Stichleitung (13) oder in Bezug zu einem eine Ringleitung (1) des Energieversorgungsnetzes speisenden Netztransformator(3) in der Mitte der Ringleitung (1) gemessen wird.

8. Verfahren nach einem der Ansprüche 1 bis 7, bei dem der Verbraucher (V) mit der höchsten Schwankungsbreite beim Blindleistungsbezug ermittelt wird, und bei dem die Messung des Netzspannungswerts (U_{Netz}) am Netzverknüpfungspunkt (5) dieses Verbrauchers (V) erfolgt.

9. Verfahren nach einem der Ansprüche 1 bis 8, bei dem ein über einen Netzverknüpfungspunkt (5) an das Energieversorgungsnetz angeschlossenes Unterversorgungsnetz als Verbraucher (V) des Energieversorgungsnetzes angesehen wird.

10. Verfahren zum Betrieb mehrerer Energieerzeuger (EE) in einem Energieversorgungsnetz gemäß einem der Ansprüche 1 bis 9, bei dem wenigstens zwei regenerative Energieerzeuger (EE) über diesen jeweils zugeordnete Netzverknüpfungspunkte (5) in eine einzige Spannungsebene einspeisen, und bei dem ihr zu liefernder Blindleistungsanteil auf die ihnen jeweils zugeordneten Wechselrichter (9) derart aufgeteilt wird, dass die Verlustleistung der Wechselrichter (9) in Summe minimiert ist.

11. Verfahren nach Anspruch 10, bei dem derjenige Energieerzeuger (EE) bevorzugt zur Blindleistungseinspeisung oder zum Blindleistungsbezug herangezogen wird, der dem Netzverknüpfungspunkt (5), an dem der Netzspannungswert (U_{Netz}) ermittelt wird, räumlich am nächsten ist.

12. Schaltungsanordnung mit einem Energieerzeuger für ein Energieversorgungsnetz, der einen Wechselrichter sowie eine Regelungseinrichtung für den Wechselrichter aufweist, die das Verfahren nach Anspruch 1 ausführt,
- wobei der Ausgang des Wechselrichters (9) mit einem ersten Netzverknüpfungspunkt (5) zur Einspeisung von elektrischer Leistung in das Energieversorgungsnetz verbunden ist, und
- wobei die Regeleinrichtung mit einem zweiten Netzverknüpfungspunkt (5) verbunden ist, der von dem ersten Netzverknüpfungspunkt (5) verschieden und von diesem beabstandet ist.

13. Schaltungsanordnung gemäß Anspruch 12, wobei zwischen dem ersten Netzverknüpfungspunkt und dem zweiten Netzverknüpfungspunkt wenigstens ein weiterer, insbesondere wenigstens zwei weitere, vorteilhaft wenigstens fünf weitere Netzverknüpfungspunkte mit an diese angeschlossenen Verbrauchern und/oder weiteren Energieerzeugern angeordnet sind.

14. Schaltungsanordnung mit wenigstens zwei Energieerzeugern für ein Energieversorgungsnetz, die jeweils einen Wechselrichter sowie eine Regelungseinrichtung für den Wechselrichter aufweisen,
- wobei die Ausgänge der Wechselrichter mit einem ersten und einem dritten Netzverknüpfungspunkt (5) zur Einspeisung von elektrischer Leistung in das Energieversorgungsnetz verbunden sind, und
- wobei die Regeleinrichtungen mit einem zweiten und entsprechend einem vierten Netzverknüpfungspunkt (5) verbunden sind, die jeweils von dem ersten und zweiten Netzverknüpfungspunkten (5) verschieden und von diesen beabstandet sind.

## Claims

1. Method for operating a first energy generator (EE) in an electrical power supply network, to which a plurality of electrical consumers (V) and at least the first energy generator (EE), which is designed in particular as a regenerative energy generator, are connected via a network connection point (5) respectively assigned thereto in each case,
- wherein at least the first energy generator (EE) has an inverter (9) with a predetermined power rating, the AC voltage output of which being electrically connected to a first network connection point (5) assigned thereto,
- wherein the operation control of the inverter (9) with respect to its reactive power feed and/or its reactive draw into or out of the power supply network takes place in dependence of a continuously measured network voltage value (N_{Netz})
- wherein the mains voltage value (N_{Netz}) is measured at a second network connection point, which is different from the first network point of the energy generator (EE),
- wherein at least one further network connection point is arranged between the first network connection point and the second network connection point, and
- wherein the mains voltage value (U_{Netz}) at the network connection points (5) of several consumers (V) at the same voltage level is determined and the operation control takes place on the basis of the correspondingly several mains voltage values (U_{Netz 1}), (U_{Netz n}), in particular on the basis of a constructed mains voltage value (U_{Netz}) determined by connection of various mains voltage values (U_{Netz 1} bis U_{Netz n}).

2. Method according to claim 1, wherein the power supply network comprises different areas on different voltage levels, and wherein the second network connection point is arranged on a different voltage level than the first network connection point of the inverter (9).

3. Method according to claim 1 or 2, wherein at least two, advantageously at least three, further advantageously at least five further network connection points and/or a transformer is/are arranged between the first network connection point and the second network connection point.

4. Method according to claim 1, 2 or 3, wherein at least one network connection point of a capacitive or inductive consumer is/are arranged between the first network connection point and the second network connection point.

5. Method according to claim 1 or 2, 3 or 4, wherein the operation control of the inverter (9) is aligned to an optimisation, in particular maximisation of the active power output delivered into the power supply network (operation at the maximum power point MMP), wherein in particular a specific absolute or maximum predeterminable reactive power value or a specific reactive power proportion (feed or draw) or a maximum reactive power proportion of the active power is maintained.

6. Method according to claim 1 or 2, 3 or 4, wherein the operation control of the inverter (9) is aligned to an optimisation, in particular maximisation of the active power output delivered into the power supply network (operation at the maximum power point MMP), wherein it additionally feeds into the power supply network or draws from it an amount of reactive power, which corresponds at maximum to the difference of the currently supplied active power with respect to the power rating of the inverter (9).

7. Method according to one of claims 1 to 6, wherein the mains voltage value (U_{Netz}) is measured at a network connection point (5) at the end of a spur line (13) or in relation to a mains transformer (3) feeding a ring line (1) of the power supply network in the middle of the ring line (1).

8. Method according to one of claims 1 to 7, wherein the consumer (V) with the highest fluctuation range in the reactive power draw is determined, and wherein the measurement of the mains voltage value (U_{Netz}) is carried out at the network connection point (5) of this consumer (V).

9. Method according to one of claims 1 to 8, wherein a sub-supply network connected to the power supply network via a network connection point (5) is seen as consumer (V) of the power supply network.

10. Method for operating a plurality of energy generators (EE) in a power supply network according to one of claims 1 to 9, wherein at least two regenerative energy generators (EE) feed into a single voltage level via network connection points (5) respectively assigned to them, and wherein the reactive power proportion that is to be supplied thereto is distributed to the inverters (9) respectively assigned thereto in such a way that the power loss of the inverters (9) is minimized in total.

11. Method according to claim 10, wherein the energy generator (EE) is preferably used for reactive power feed or reactive power draw, that is spatially closest to the network connection point (5) at which the mains voltage value (U_{Netz}) is determined.

12. Circuit arrangement with an energy generator for a power supply network, which has an inverter and a control device for the inverter, said control device carrying out the method according to claim 1,
- wherein the output of the inverter (9) is connected to a first network connection point (5) for feeding electrical power into the power supply network, and
- wherein the control device is connected to a second network connection point (5), which is different from the first network connection point (5) and spaced apart from it.

13. Circuit arrangement according to claim 12, wherein between the first network connection point and the second network connection point at least one further, in particular at least two further, advantageously at least five further network connection points with connected consumers and/or further energy generators are arranged.

14. Circuit arrangement with at least two energy generators for a power supply network, each of which has an inverter and a control device for the inverter,
- wherein the outputs of the inverters are connected to a first and a third network connection point (5) for feeding electrical power to the power supply network, and
- wherein the control device are connected to a second and correspondingly a fourth network connection point (5) which are respectively different from and spaced apart from the first and second network connection points (5).

## Revendications

1. Procédé de fonctionnement d'un premier générateur d'énergie (EE) dans un réseau d'alimentation en énergie électrique, auquel est relié une pluralité de consommateurs électriques (V) et au moins le premier générateur d'énergie (EE), qui est conçu en particulier comme générateur d'énergie régénératif, chacun via un point de raccordement réseau (5) respectivement associé,
- dans lequel au moins le premier générateur d'énergie (EE) comporte un onduleur (9) de puissance nominale prédéfinie dont la sortie de tension alternative est électriquement reliée à un premier point de raccordement réseau (5) qui lui est attribué,
- dans lequel la gestion de l'onduleur (9) en termes de l'alimentation en puissance réactive et/ou de référence de puissance réactive dans ou hors du réseau d'alimentation en énergie électrique dépend d'une valeur de tension de réseau (N_{Netz}) mesurée en permanence,
- dans lequel la valeur de la tension de réseau (N_{Netz}) est mesurée à un deuxième point de raccordement réseau qui est différent du premier point de raccordement réseau du générateur d'énergie (EE),
- dans lequel au moins un autre point de raccordement réseau est disposé entre le premier point de raccordement réseau et le deuxième point de raccordement réseau, et
- dans lequel la tension de réseau (U_{Netz}) est déterminé aux points de raccordement réseau (5) par plusieurs consommateurs (V) au même niveau de tension et la gestion se fait sur la base des différentes valeurs de tension de réseau correspondantes (U_{Netz 1}), (U_{Netz n}), en particulier sur la base d'une valeur de tension de réseau (U_{Netz}) construite, déterminée par l'association des différentes valeurs de tension de réseau (U_{Netz} 1 à U_{Netz n}).

2. Procédé selon la revendication 1, dans lequel le réseau d'alimentation en énergie électrique comporte différentes zones à différents niveaux de tension, et dans lequel le deuxième point de raccordement réseau est disposé à un niveau de tension différent de celui du premier point de raccordement réseau de l'onduleur (9).

3. Procédé selon la revendication 1 ou 2, dans lequel au moins deux, avantageusement au moins trois, avantageusement encore au moins cinq autres points de raccordement réseau et/ou un transformateur est/sont disposés entre le premier point de raccordement réseau et le deuxième point de raccordement réseau.

4. Procédé selon la revendication 1, 2 ou 3, dans lequel au moins un point de raccordement réseau d'un consommateur capacitif ou inductif est disposé entre le premier point de raccordement réseau et le deuxième point de raccordement réseau.

5. Procédé selon la revendication 1 ou 2, 3 ou 4, dans lequel la gestion de l'onduleur (9) est orientée vers une optimisation, en particulier une maximisation de la puissance active fournie dans le réseau d'alimentation en énergie électrique (fonctionnement au point de puissance maximale MMP), dans lequel en particulier une valeur de puissance réactive absolue ou maximale spécifique prédéterminable ou une proportion de puissance réactive spécifique (alimentation ou référence) ou une proportion de la puissance réactive maximale est maintenue.

6. Procédé selon la revendication 1 ou 2, 3 ou 4, dans lequel la gestion de l'onduleur (9) est orientée vers une optimisation, en particulier une maximisation de la puissance active fournie dans le réseau d'alimentation en énergie électrique (fonctionnement au point de puissance maximale MMP), dans lequel l'onduleur en plus fournit dans le réseau d'alimentation ou dégage du réseau d'alimentation une quantité de puissance réactive correspondant au maximum à la différence entre la puissance active actuellement délivrée et la puissance nominale de l'onduleur (9).

7. Procédé selon l'une des revendications 1 à 6, dans lequel la valeur de la tension du réseau (U_{Netz}) est mesurée à un point de raccordement réseau (5) à l'extrémité d'une ligne de dérivation (13) ou par rapport à un transformateur de réseau (3) alimentant une ligne annulaire (1) du réseau d'alimentation en énergie électrique au milieu de la ligne annulaire (1).

8. Procédé selon l'une des revendications 1 à 7, dans lequel on détermine le consommateur (V) avec la marge de fluctuation la plus élevée dans la référence de puissance réactive, et dans lequel la mesure de la valeur de la tension du réseau (U_{Netz}) est effectuée au point de raccordement réseau (5) de ce consommateur (V).

9. Procédé selon l'une des revendications 1 à 8, dans lequel un réseau de sous-alimentation relié au réseau d'alimentation en énergie électrique via un point de raccordement réseau (5) est considéré comme consommateur (V) du réseau d'alimentation en énergie électrique.

10. Procédé pour le fonctionnement de plusieurs générateurs d'énergie (EE) dans un réseau d'alimentation en énergie électrique selon l'une des revendications 1 à 9, dans lequel au moins deux générateurs d'énergie régénératif (EE) alimentent un seul niveau de tension par l'intermédiaire de ces points de raccordement réseau (5) qui leur sont respectivement associés, et dans lequel la proportion de puissance réactive à leur fournier est répartie sur les onduleurs (9), qui leur sont respectivement associés, de telle sorte que la perte de puissance des onduleurs (9) soit minimisée au total.

11. Procédé selon la revendication 10, dans lequel le générateur d'énergie (EE) est utilisé de préférence pour l'alimentation en puissance réactive ou la référence de puissance réactive qui est spatialement le plus proche du point de raccordement réseau (5) auquel la valeur de la tension du réseau (UNetz) est déterminée.

12. Circuit avec un générateur d'énergie pour un réseau d'alimentation en énergie électrique, ledit générateur comportant un onduleur ainsi qu'un dispositif de commande pour l'onduleur, ledit dispositif de commande exécutant le procédé selon la revendication 1,
- dans lequel la sortie de l'onduleur (9) est rélié à un premier point de raccordement réseau (5) pour alimenter de l'énergie électrique dans le réseau d'alimentation en énergie électrique, et
- dans lequel le dispositif de commande est reliée à un deuxième point de raccordement réseau (5) qui est différent du premier point de raccordement réseau (5) et à distance de celui-ci.

13. Circuit selon la revendication 12, dans lequel entre le premier point de raccordement réseau et le deuxième point de raccordement réseau sont disposés au moins un autre, en particulier au moins deux autres, avantageusement au moins cinq autres points de raccordement réseau avec des consommateurs et/ou d'autres producteurs d'énergie.

14. Circuit avec au moins deux générateurs d'énergie pour un réseau d'alimentation en énergie électrique, dont chacun comporte un onduleur et un dispositif de commande pour l'onduleur,
- dans lequel les sorties des onduleurs sont reliées à un premier et à un troisième point de raccordement réseau (5) pour alimenter de l'énergie électrique dans le réseau d'alimentation en énergie électrique, et
- dans lequel les dispositifs de commande sont connectés à un deuxième et, de manière correspondante, à un quatrième point de raccordement réseau (5), qui sont respectivement différents et à distance des premiers et des deuxièmes points de raccordement réseau (5).
